# EUROPÄISCHE PATENTSCHRIFT

(11) **EP 1 655 512 B1**
(45) Veröffentlichungstag und Bekanntmachung des Hinweises auf die Patenterteilung: **31.03.2010**
(21) Anmeldenummer: 05022639.8
(22) Anmeldetag: 18.10.2005
(51) Int. Cl.: F16H 25/22, F16H 57/04

(54) **Kugelgewindetrieb**
Ball screw drive
Vis à bille

(30) Priorität: 04.11.2004 DE 102004053204
(43) Veröffentlichungstag der Anmeldung: 10.05.2006
(73) Patentinhaber: Schaeffler KG, 91074 Herzogenaurach (DE)
(72) Erfinder: Osterlaenger, Juergen, 91448 Emskirchen (DE); Mayer, Ralf, 91074 Herzogenaurach (DE); Muenck, Horst, 91074 Herzogenaurach (DE)

(56) Entgegenhaltungen:
- EP-A- 0 930 450
- DE-A1- 10 056 275
- DE-A1- 10 200 878
- DE-A1- 10 242 297
- JP-A- 4 078 358
- JP-A- 63 001 852
- JP-A- 2004 060 742
- JP-A- 2004 150 590
- US-A1- 2003 145 670

## Beschreibung

Die vorliegende Erfindung betrifft einen Kugelgewindetrieb. Kugelgewindetriebe können rotative Bewegungen in lineare Bewegungen umwandeln.

Aus JP 63001852 A beispielsweise ist ein Kugelgewindetrieb bekannt geworden, dessen Spindelmutter am Innenumfang eine schraubenförmig gewundene Kugelrille aufweist, wobei ein Umlenkrohr für Kugeln vorgesehen ist, in dem Kugeln von einem Ende zu einem Anfang der Kugelrille umgelenkt werden. Am Innenumfang des Umlenkrohres sind mit Schmierstoff versehene Schmierstoffnuten ausgebildet.

Aufgabe der vorliegenden Erfindung ist es, einen Kugelgewindetrieb nach den Merkmalen des Oberbegriffs des Anspruchs 1 anzugeben, dessen mit den Schmierstoffnuten versehenes Umlenkrohr auf einfache Weise herstellbar ist. Erfindungsgemäß wird diese Aufgabe dadurch gelöst, dass das aus Kunststoff im Spritzverfahren hergestellte Umlenkrohr entlang einer Teilungsebene in zwei Rohrhälften längs geteilt ist, wobei zu beiden Seiten der Teilungsebene die Schmierstoffnuten angeordnet sind. Bei dem erfindungsgemäßen Kugelgewindetrieb kann ein einfaches Spritzwerkzeug zum Einsatz kommen. Die Rohrhälften ansich und die Schmierstoffnuten können in einem einzigen Arbeitsgang hergestellt werden.

Vorzugsweise verläuft die Teilungsebene in der Längsmittelebene des Umlenkrohres. In ein und demselben Spritzwerkzeug können beide Hälften des Umlenkrohres hergestellt werden und anschließend zu dem Umlenkrohr zusammengelegt werden. Es kann auch ein Spritzwerkzeug vorgesehen werden, mit dem beide Rohrhälften in einem einzigen Arbeitsgang hergestellt werden können, wobei zusätzlich die beiden Rohrhälften mittels eines einstückig an beide Rohrhälften angeformten Filmgelenkes miteinander verbunden sein können.

Zur sicheren Lagefixierung der beiden Rohrhälften zueinander können die beiden Rohrhälften miteinander verzapft sein. In diesem Fall mag es zweckmäßig sein, wenn die Teilungsebene von den Schmierstoffnuten beabstandet angeordnet ist. Die Aufstandsflächen der beiden Rohrhälften sind nicht reduziert infolge von Ausnehmungen am Rohrmantel. An diesen Aufstandsflächen können Zapfen und gegenüberliegend Bohrungen zum Eingriff der Zapfen vorgesehen werden.

Erfindungsgemäß sind die Schmierstoffnuten in Richtung quer zur Teilungsebene des Umlenkrohres hinterschnittfrei angeordnet. Das Entformen im Anschluß an den Spritzvorgang ist dann problemlos möglich.

Nachstehend wird die Erfindung an Hand von zwei in insgesamt vier Figuren abgebildeten Ausführungsbeispielen näher erläutert. Es zeigen:
- Figur 1: einen Längsschnitt durch einen erfindungsgemäßen Kugelgewindetrieb,
- Figur 2: eine Rohrhälfte eines Umlenkrohres des erfindungsgemäßen Kugelgewindetriebes gemäß Figur 1,
- Figur 3: einen Querschnitt durch das Umlenkrohr des erfindungsgemäßen Kugelgewindetrieb aus Figur 1 und
- Figur 4: eine Variante eines erfindungsgemäßen Umlenkrohres in einer Darstellung wie in Figur 3.

### Ausführliche Beschreibung der Zeichnung

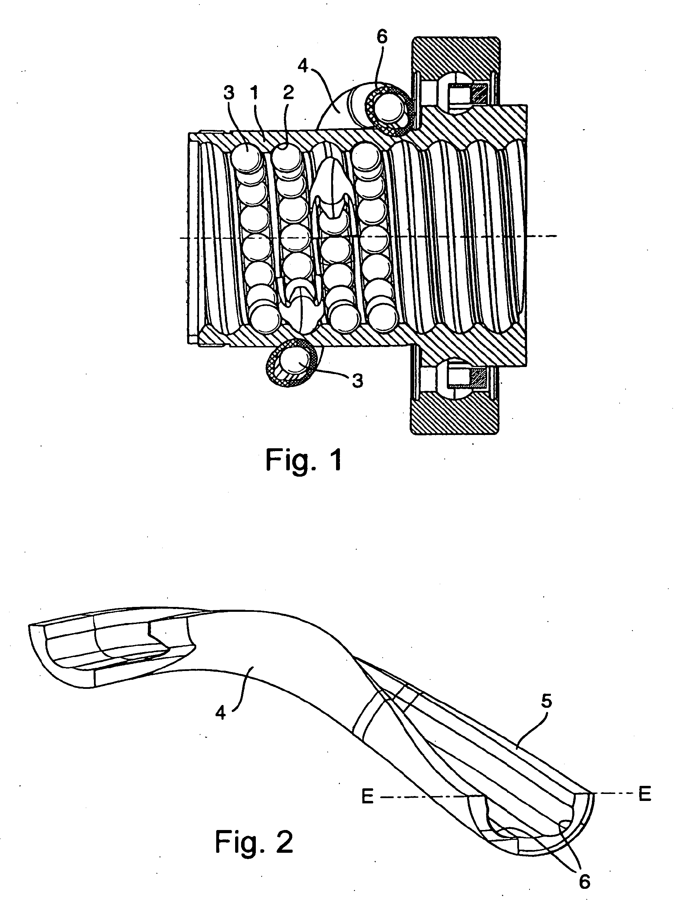

Der in Figur 1 abgebildete erfindungsgemäße Kugelgewindetrieb weist eine Spindelmutter 1 auf, an deren Innenumfang eine schraubenförmig gewundene Kugelrille 2 ausgebildet ist. Diese Spindelmutter 1 ist auf einer hier nicht abgebildeten Kugelrollspindel drehbar angeordnet. Diese Kugelrollspindel ist mit einer schraubenförmig angeordneten Kugelrille versehen. Kugeln 3 wälzen an der Kugelrille 2 der Spindelmutter 1 und an der hier nicht dargestellten Kugelrille der Kugelrollspindel ab. Für einen endlosen Kugelumlauf der Kugeln 3 ist ein Umlenkrohr 4 am Außenumfang der Spindelmutter 1 angeordnet. Die beiden Enden des Umlenkrohres 4 sind an die beiden Enden der Kugelrille 2 angeschlossen. Auf diese Weise ist ein endloser Umlauf der Kugeln gewährleistet.

Figur 2 zeigt in vergrößerter Darstellung eine Rohrhälfte des Umlenkrohres 4. Die zweite Rohrhälfte ist hier nicht abgebildet. Die beiden Rohrhälften bilden gemeinsam das Umlenkrohr 4. Die Teilungsebene E deckt sich vorliegend mit der Längsmittelebene des Umlenkrohres 4. Die Wandung des Umlenkrohres 4 bildet an der Teilungsebene E eine Aufstandsfläche 5 für die gegenüberliegend angeordnete Rohrhälfte. Die beiden Rohrhälften können an diesen Aufstandsflächen wechselweise mit Zapfen und Bohrungen zum Eingriff für die Zapfen versehen sein.

Am Innenumfang des Umlenkrohres 4 sind entlang der Ersteckung der Rohrhälften Schmierstoffnuten 6 ausgebildet. Diese Schmierstoffnuten 6 sind parallel zur Teilungsebene E angeordnet.

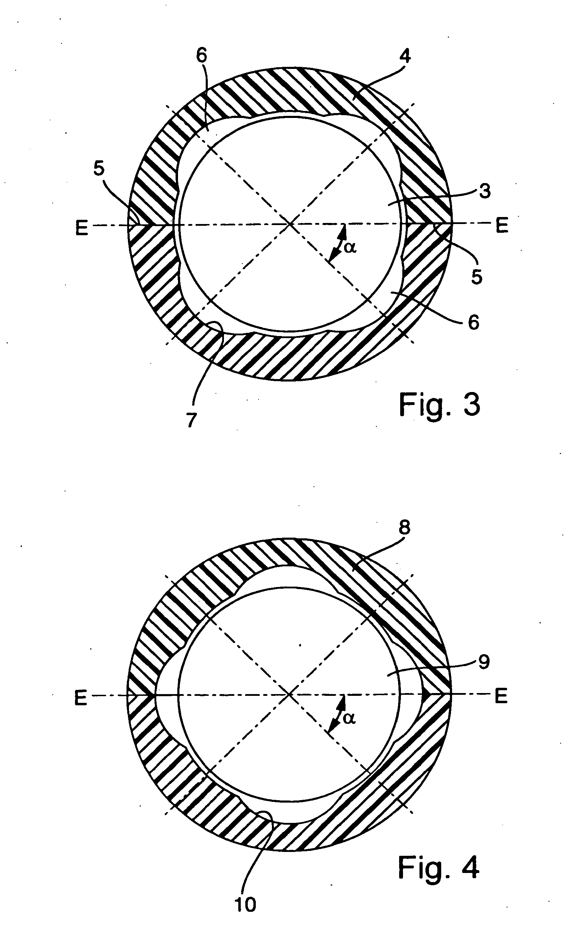

Figur 3 zeigt in einem Querschnitt das Umlenkrohr 4 mit einer darin angeordneten Kugel 3. Die beiden Rohrhälften liegen mit ihren Aufstandsflächen 5 aneinander an. Die Schmierstoffnuten 6 sind mit einer gewölbten Wandung 7 versehen.

Die Längsmittellinien der Schmierstoffnuten 6 sind unter einem Winkel α bezogen auf die Teilungsebene E angeordnet. Dieser Winkel α beträgt vorzugsweise 45 °. Auf diese Weise ergeben sich bei Anordnung der Teilungsebene E in der Längsmittelebene des Umlenkrohres an beiden Rohrhälften zwei Schmierstoffnuten 6, die in einem Winkel von ca. 90 ° zueinander angeordnet sind. Dieser Winkelabstand errechnet sich aus 180 ° abzüglich dem doppelten Wert des Winkels von α = 45°.

In diese Schmierstoffnuten 6 wird hier nicht abgebildeter Schmierstoff eingebettet. Dieser Schmierstoff kann ein Fett sein, es können jedoch auch Festkörperschmierstoffe zum Einsatz kommen.

Figur 4 zeigt in einem Querschnitt wie in Figur 3 ein modifiziertes Umlenkrohr 8, das ebenfalls aus zwei Rohrhälften gebildet ist. Auch in diesem Fall deckt sich die Teilungsebene E mit der Längsmittelebene des Umlenkrohres 8. Im Unterschied zu dem oben beschriebenen Umlenkrohr fallen hier die Teilungsebene E und die Mittellinien von zwei diametral einander gegenüber liegend angeordneten Schmierstoffnuten 9 zusammen. Die eine Hälfte der an der Teilungsebene E angrenzenden Schmierstoffnut 9 ist an der einen Rohrhälfte und die andere Hälfte der Schmierstoffnut ist an der anderen Rohrhälfte ausgebildet. Bei dieser Anordnung der Teilungsebene ist auf einfache Art und Weise gewährleistet, dass die Schmierstoffnuten hinterschnittfrei angeordnet sind. In anderen Worten ausgedrückt bedeutet dies, dass in Richtung quer zur Teilungsebene E die Wandung der Schmierstoffnuten 9 voll einsehbar ist. Nach Abschluß des Spritzvorganges kann das Werkzeug geöffnet werden, ohne dass es besonderer Maßnahmen bedarf um das Spritzwerkzeug aus den Schmierstoffnuten 9 herauszufahren.

Auch wenn die Teilungsebene E beabstandet von den Schmierstoffnuten angeordnet ist, wie es beispielsweise in dem Ausführungsbeispiel gemäß Figur 3 abgebildet ist, ist eine hinterschnittfreie Ausbildung der Schmierstoffnuten möglich.

### Bezugszahlenliste

- 1: Spindelmutter
- 2: Kugelrille
- 3: Kugel
- 4: Umlenkrohr
- 5: Aufstandsfläche
- 6: Schmierstoffnut
- 7: Wandung
- 8: Umlenkrohr
- 9: Schmierstoffnut
- 10: Wandung

## Patentansprüche

1. Kugelgewindetrieb, mit einer Spindelmutter (1), an deren Innenumfang eine schraubenförmig gewundene Kugelrille (2) ausgebildet ist, wobei ein Umlenkrohr (4) für Kugeln (3) vorgesehen ist, in dem die Kugeln von einem Ende zu einem Anfang der Kugelrille (2) umgelenkt werden, wobei am Innenumfang des Umlenkrohres (4) mit Schmierstoff versehene Schmierstoffnuten (6, 9) ausgebildet sind, **dadurch gekennzeichnet, dass** das aus Kunststoff hergestellte Umlenkrohr (4, 8) entlang einer Teilungsebene (E) in zwei Rohrhälften längsgeteilt ist, wobei zu beiden Seiten der Teilungsebene (E) die Schmierstoffnuten (6, 9) angeordnet sind, wobei in Richtung quer zur Teilungsebene (E) die Schmierstoffnuten (6,9) hinterschnittfrei angeordnet sind.

2. Kugelgewindetrieb nach Anspruch 1, bei dem die Teilungsebene (E) in der Längsmittelebene des Umlenkrohres (4, 8) angeordnet ist.

3. Kugelgewindetrieb nach Anspruch 1, bei dem die Teilungsebene (E) von den Schmierstoffnuten (6) beabstandet angeordnet ist.

## Claims

1. Ball screw, having a spindle nut (1), on the inner circumference of which a helically wound ball groove (2) is formed, a return tube (4) being provided for balls (3), in which the balls are returned from an end to a beginning of the ball groove (2), lubricant channels (6, 9) provided with lubricant being formed on the inner circumference of the return tube(4), **characterized in that** the plastic return tube (4, 8) is longitudinally divided along a parting plane (E) into two half-tubes, the lubricant channels (6, 9) being arranged on both sides of the parting plane (E), the lubricant channels (6, 9) being arranged without any undercut in the transverse direction to the parting plane (E).

2. Ball screw according to Claim 1, **characterized in that** the parting plane (E) is arranged in the longitudinal mid-plane of the return tube (4, 8).

3. Ball screw according to Claim 1, **characterized in that** the parting plane (E) is arranged at an interval from the lubricant channels (6).

## Revendications

1. Vis à bille, comprenant un écrou de broche (1), à la périphérie intérieure duquel est réalisée une gorge à bille (2) enroulée en hélice, un tube de déviation (4) étant prévu pour les billes (3), dans lequel les billes sont déviées d'une extrémité jusqu'au début de la gorge à bille (2), des rainures de lubrifiant (6, 9) pourvues de lubrifiant étant réalisées sur la périphérie intérieure du tube de déviation (4), **caractérisée en ce que** le tube de déviation (4, 8) fabriqué en plastique est divisé en longueur le long d'un plan de séparation (E) en deux moitiés tubulaires, les rainures de lubrifiant (6, 9) étant disposées des deux côtés du plan de séparation (E), et les rainures de lubrifiant (6, 9) étant disposées sans contre-dépouille dans la direction transversale au plan de séparation (E).

2. Vis à bille selon la revendication 1, dans laquelle le plan de séparation (E) est disposé dans le plan médian longitudinal du tube de déviation (4, 8).

3. vis à bille selon la revendication 1, dans laquelle le plan de séparation (E) est disposé à distance des rainures de lubrifiant (6).
